(19) Europäisches Patentamt / European Patent Office / Office européen des brevets

(11) **EP 4 613 156 A1**

(12) **EUROPÄISCHE PATENTANMELDUNG**

(43) Veröffentlichungstag:
    **10.09.2025   Patentblatt 2025/37**

(21) Anmeldenummer: **25158501.4**

(22) Anmeldetag: **18.02.2025**

(51) Internationale Patentklassifikation (IPC):
    *A47J 42/16* $^{(2006.01)}$     *A47J 42/38* $^{(2006.01)}$
    *A47J 42/06* $^{(2006.01)}$

(52) Gemeinsame Patentklassifikation (CPC):
    **A47J 42/16; A47J 42/38;** A47J 42/06

(84) Benannte Vertragsstaaten:
    **AL AT BE BG CH CY CZ DE DK EE ES FI FR GB GR HR HU IE IS IT LI LT LU LV MC ME MK MT NL NO PL PT RO RS SE SI SK SM TR**
    Benannte Erstreckungsstaaten:
    **BA**
    Benannte Validierungsstaaten:
    **GE KH MA MD TN**

(30) Priorität: **06.03.2024   DE 102024202105**

(71) Anmelder: **WMF GmbH**
    **73312 Geislingen/Steige (DE)**

(72) Erfinder:
    • **YASAR, Ertugrul**
      **89275 Elchingen (DE)**
    • **CASADO, Sebastian**
      **73111 Lauterstein (DE)**

(74) Vertreter: **Pfenning, Meinig & Partner mbB**
    **Patent- und Rechtsanwälte**
    **Theresienhöhe 11a**
    **80339 München (DE)**

(54)    **VERFAHREN ZUR HERSTELLUNG EINER KAFFEEMÜHLE UND KAFFEEMÜHLE**

(57)    Es wird ein Verfahren zur Herstellung einer Kaffeemühle und eine Kaffeemühle bereitgestellt. In dem Verfahren wird eine erste Bauteilgruppe einer Kaffeemühle, die erstes Mahlelement aufweist und eine zweiten Bauteilgruppe einer Kaffeemühle, die ein zweites Mahlelement aufweist, bereitgestellt und die erste Bauteilgruppe mit der zweiten Bauteilgruppe zu einer Kaffeemühle verbunden, wobei sich zwischen dem ersten und zweiten Mahlelement ein Mahlspalt mit einer Höhe ausbildet. Ferner findet eine Bestimmung einer Höhenänderung des Mahlspalts in Abhängigkeit von der Temperatur statt, wobei bei dem Bereitstellen der ersten und/oder zweiten Bauteilgruppe mindestens eine Maßnahme durchgeführt wird, um zu bewirken, dass eine Höhenänderung des Mahlspalts der Kaffeemühle in Abhängigkeit von der Temperatur $\leq 0{,}30$ $\mu$m/K beträgt. Es kann somit eine Kaffeemühle bereitgestellt werden, die bei einem Aufheizen der Kaffeemühle während eines Betriebs sicherstellt, dass ein gewünschter Mahlgrad von Kaffee möglichst gleich gehalten wird.

Figur

EP 4 613 156 A1

**Beschreibung**

Es wird ein Verfahren zur Herstellung einer Kaffeemühle und eine Kaffeemühle bereitgestellt. In dem Verfahren wird eine erste Bauteilgruppe einer Kaffeemühle, die erstes Mahlelement aufweist und eine zweiten Bauteilgruppe einer Kaffeemühle, die ein zweites Mahlelement aufweist, bereitgestellt und die erste Bauteilgruppe mit der zweiten Bauteilgruppe zu einer Kaffeemühle verbunden, wobei sich zwischen dem ersten und zweiten Mahlelement ein Mahlspalt mit einer Höhe ausbildet. Ferner findet eine Bestimmung einer Höhenänderung des Mahlspalts in Abhängigkeit von der Temperatur statt, wobei bei dem Bereitstellen der ersten und/oder zweiten Bauteilgruppe mindestens eine Maßnahme durchgeführt wird, um zu bewirken, dass eine Höhenänderung des Mahlspalts der Kaffeemühle in Abhängigkeit von der Temperatur $\leq$ 0,30 $\mu$m/K beträgt. Es kann somit eine Kaffeemühle bereitgestellt werden, die bei einem Aufheizen der Kaffeemühle während eines Betriebs sicherstellt, dass ein gewünschter Mahlgrad von Kaffee möglichst gleich gehalten wird.

Aktuell bestehen Kaffeemühlen (als Einzelgerät oder als Komponente, die in eine automatische Kaffeemaschine eingebaut ist) typischerweise aus metallischen Werkstoffen, keramischen Werkstoffen und/oder polymeren Werkstoffen.

Durch die die Abwärme, die während dem Betrieb der Kaffeemühle entsteht (z.B. durch die Aktivität des Motors der Kaffeemühle und/oder durch den Mahlvorgang an den Mahlscheiben der Kaffeemühle) erfahren die einzelnen Bauteile bzw. Komponenten der Kaffeemühle eine Erwärmung und eine Wärmeausdehnung. Hierbei ist der Grad der Wärmeausdehnung von dem spezifischen Wärmeausdehnungskoeffizient der Materialien abhängig, aus dem die Bauteile der Kaffeemühle gefertigt sind.

Aufgrund des charakteristischen Aufbaus einer Kaffeemühle, d.h. einer Verbindung der ersten Mahlscheibe mit einer ersten Bauteilgruppe der Kaffeemühle und einer Verbindung der zweiten Mahlscheibe mit einer zweiten Bauteilgruppe der Kaffeemühle, zu einer Veränderung der Höhe des Mahlspalts, d.h. eines Abstands der Mahlscheiben zueinander bzw. einer Ausdehnung des Mahlspalts in Richtung einer Drehachse von zumindest einer der Mahlscheiben (d.h. in axialer Richtung von zumindest einer der Mahlscheiben). Da Kaffeemühlen während ihrem Betrieb Temperaturen bis zu 80°C erreichen können, kann eine Veränderung der Höhe des Mahlspalts während dem Betrieb sehr hoch ausfallen.

Wird ein gewünschter Mahlgrad beispielsweise bei Raumtemperatur (20 °C) eingestellt, beträgt der Temperaturunterschied während dem Betrieb der Kaffeemühle somit bis zu 60 K, was sich relativ stark auf die Höhe des Mahlspalts auswirken kann, d.h. eine unerwünscht starke Vergrößerung oder Verkleinerung der Höhe des Mahlspalts während dem Betrieb der Kaffeemühle bewirken kann. Würde sich beispielsweise bei einer Kaffeemühle aus dem Stand der Technik die Höhe des Mahlspalts um 0,55 $\mu$m/K verändern, so wäre die absolute Veränderung der Höhe des Mahlspalts bei einer Temperaturerhöhung der Kaffeemühle um 60 K ganze 33 $\mu$m. Da beispielsweise bei Scheibenmahlwerken die Mahlspalte typischerweise im Bereich zwischen 0 $\mu$m und 200 $\mu$m liegen, würde dies einer relativen Höhenänderung im Mahlspalt von $\geq$ 16,5% entsprechen.

Die Höhe des Mahlspalts beeinflusst jedoch das Mahlergebnis (d.h. die Korngrößenverteilung von gemahlenem Kaffee), d.h. eine Temperatur-bedingte Vergrößerung der Höhe des Mahlspalts führt zu einer größeren Korngröße des gemahlenen Kaffees und eine Temperatur-bedingte Verkleinerung der Höhe des Mahlspalts führt zu einer kleineren Korngröße des gemahlenen Kaffees. Eine solche Temperatur-bedingte Veränderung der Höhe des Mahlspalts während einem Betrieb der Kaffeemühle ist unerwünscht, da die Korngröße (bzw. Korngrößenverteilung) während einem Betrieb einer Kaffeemühle möglichst konstant auf einem von einem Benutzer oder der Kaffeemühle eingestellten Wert bleiben soll. Nur so kann sichergestellt werden, dass mit den gemahlenen Kaffeebohnen ein Kaffee gebrüht werden kann, der die vom Benutzer gewünschten Eigenschaften aufweist bzw. eine höchstmögliche Qualität aufweist.

Im Stand der Technik wird bislang kein spezielles Augenmerk auf das Verhindern einer Temperatur-bedingten Veränderung der Höhe des Mahlspalts während einem Betrieb von Kaffeemühlen und die dadurch bedingte Abweichung von einem gewünschten Mahlergebnis bzw. die dadurch bedingte Verschlechterung in der Qualität eines Kaffees gelegt, der mit Kaffeepulver gebrüht wird, das von der Kaffeemühle bereitgestellt wurde.

Bislang ist lediglich der Versuch bekannt, einen Mahlgrad der Kaffeemühle während dem Betrieb über einen aktiven Verstellmechanismus zu verändern, um eine Temperatur-bedingte Änderung der Höhe des Mahlspalts zu kompensieren. Diese Maßnahme ist jedoch ungenau und benötigt (elektrische) Energie. Dadurch kann eine Temperatur-bedingte Veränderung der Höhe des Mahlspalts nicht mit hoher Sicherheit verhindert werden und die auf diesem Mechanismus beruhenden Kaffeemühlen sind energieintensiv und fehleranfällig, was deren Betrieb unökonomisch macht.

Ausgehend hiervon war es die Aufgabe der vorliegenden Erfindung, ein Verfahren zur Herstellung einer Kaffeemühle bereitzustellen, das zumindest einen Nachteil aus dem Stand der Technik überwindet. Insbesondere sollte es mit dem Verfahren möglich sein, eine Kaffeemühle bereitzustellen, mit der es möglich ist, bei einem Aufheizen der Kaffeemühle während eines Betriebs der Kaffeemühle sicherzustellen, dass ein gewünschter Mahlgrad von Kaffee möglichst gleich gehalten wird, bevorzugt annähernd konstant gehalten wird, und mit dem gemahlenen Kaffee ein Kaffee mit den gewünschten und/oder bestmöglichen Eigenschaften gebrüht wird.

Die Aufgabe wird gelöst durch das Verfahren mit den Merkmalen von Anspruch 1 und die Kaffeemühle mit den Merkmalen von Anspruch 10. Die abhängigen Ansprüche zeigen vorteilhafte Weiterbildung auf.

Erfindungsgemäß wird ein Verfahren zur Herstellung einer Kaffeemühle bereitgestellt, umfassend die folgenden Schritte oder bestehend daraus:

> a) Bereitstellen einer ersten Bauteilgruppe einer Kaffeemühle, die ein mit der ersten Bauteilgruppe verbundenes, erstes Mahlelement aufweist;
> b) Bereitstellen einer zweiten Bauteilgruppe einer Kaffeemühle, die ein mit der zweiten Bauteilgruppe verbundenes, zweites Mahlelement aufweist;
> c) Verbinden der ersten Bauteilgruppe mit der zweiten Bauteilgruppe zu einer Kaffeemühle, wobei das erste Mahlelement über dem zweiten Mahlelement angeordnet wird und sich zwischen dem ersten und zweiten Mahlelement ein Mahlspalt ausbildet, wobei der Mahlspalt eine Höhe aufweist; und
> d) Bestimmung einer Höhenänderung des Mahlspalts in Abhängigkeit von der Temperatur;

dadurch gekennzeichnet, dass bei dem Bereitstellen der ersten Bauteilgruppe und/oder der zweiten Bauteilgruppe mindestens einer der folgenden Maßnahmen durchgeführt wird, um zu bewirken, dass eine Höhenänderung des Mahlspalts der Kaffeemühle in Abhängigkeit von der Temperatur ≤ 0,30 $\mu$m/K beträgt:

- Auswahl einer bestimmten Höhe für zumindest ein Bauteil der ersten und/oder der zweiten Bauteilgruppe, wobei sich die bestimmte Höhe auf eine Länge in Richtung der Drehachse von zumindest einem der Mahlelemente bezieht;
- Auswahl eines bestimmten Materials für zumindest ein Bauteil der ersten und/oder zweiten Bauteilgruppe; und
- Auswahl einer bestimmten Höhe und/oder eines bestimmten Materials für ein Kompensationselement, das mit der ersten und/oder zweiten Bauteilgruppe verbunden wird, wobei sich die bestimmte Höhe auf eine Länge in Richtung der Drehachse von zumindest einem der Mahlelemente bezieht.

Mit dem erfindungsgemäßen Verfahren kann eine Kaffeemühle bereitgestellt werden, mit der es möglich ist, bei einem Aufheizen der Kaffeemühle während eines Betriebs der Kaffeemühle sicherzustellen, dass ein gewünschter Mahlgrad von Kaffee möglichst gleich gehalten wird. Es kann mit der über das erfindungsgemäße Verfahren hergestellten Kaffeemühle ein gemahlener Kaffee bereitgestellt werden, mit dem ein Kaffeegetränk mit den gewünschten und/oder bestmöglichen Eigenschaften gebrüht werden kann.

Unter dem Begriff "Mahlspalt" wird erfindungsgemäß insbesondere der Raum zwischen dem ersten Mahlelement und dem zweiten Mahlelement verstanden. Unter der Höhe des Mahlspalts wird erfindungsgemäß insbesondere der kleinste Abstand zwischen dem ersten Mahlelement und dem zweiten Mahlelement verstanden (d.h. deren kleinste Entfernung im Mahlspalt). Dieser Abstand kann ein Abstand in Richtung einer Drehachse von zumindest einem der Mahlelemente sein (z.B. bei einem Scheibenmahlwerk) oder kann ein Abstand in einer Richtung im Wesentlichen senkrecht zu einer Drehachse von zumindest einem der Mahlelemente sein (z.B. bei einem Kegelmahlwerk).

Bei der mit dem erfindungsgemäßen Verfahren hergestellten Kaffeemaschine verändert sich die Höhe des Mahlspalts in Abhängigkeit von der Temperatur der Kaffeemühle nur minimal vom eingestellten Wert. Folglich kann die Mahlgutqualität des gemahlenen Kaffees und ein Brüherergebnis eines mit dem gemahlenen Kaffeepulver gebrühten Kaffees auch während eines Betriebs der Kaffeemühle, der mit einem Aufheizen der Kaffeemühle verbunden ist, sehr hoch gehalten werden.

Ein Nachstellen der Höhe des Mahlspalts über eine aktiven Verstellmechanismus ist damit nicht nötig, wodurch der Betrieb der Kaffeemühle ernergieärmer und weniger fehleranfällig (d.h. ökonomischer) wird. Zudem kann ein von einem Benutzer oder der Kaffeemühle eingestellter Mahlgrad während dem Betrieb der Kaffeemaschine zuverlässiger eingehalten werden als mit einem aktiven Verstellmechanismus. Prinzipiell ist sogar eine vollständige Kompensation der Wärmedehnung in Bezug auf die Höhe des Mahlspalts möglich, d.h. in diesem Fall beträgt eine Veränderung der Höhe des Mahlspalts 0 $\mu$m/K.

Die in dem erfindungsgemäßen Verfahren durchgeführte Maßnahme kann eine Auswahl einer bestimmten Höhe für zumindest ein Bauteil der ersten und/oder der zweiten Bauteilgruppe und eine Auswahl eines bestimmten Materials für zumindest ein Bauteil der ersten und/oder zweiten Bauteilgruppe umfassen oder daraus bestehen, wobei sich die bestimmte Höhe auf eine Länge in Richtung der Drehachse von zumindest einem der Mahlelemente bezieht. In diesem Fall kann das Vorsehen eines Kompensationselements bei der Herstellung der Kaffeemühle unnötig sein, was die Kaffeemühle baulich einfacher und kostengünstiger herstellen lässt.

Ferner kann die in dem erfindungsgemäßen Verfahren durchgeführte Maßnahme eine Auswahl einer bestimmten Höhe und/oder eines bestimmten Materials für ein Kompensationselement, das mit der ersten und/oder zweiten Bauteilgruppe verbunden wird, umfassen oder daraus bestehen, wobei sich die bestimmte Höhe auf eine Länge in Richtung der Drehachse von zumindest einem der Mahlelemente bezieht. In diesem Fall kann eine Auswahl einer bestimmten Höhe für zumindest ein Bauteil der ersten und/oder der zweiten Bauteilgruppe und eine Auswahl eines bestimmten Materials für zumindest ein Bauteil der ersten und/oder zweiten Bauteilgruppe unnötig sein, was mehr Designspielraum bei der Herstellung der Kaffeemühle ermöglicht und den Einsatz von bestimmten, gewünschten (z.B. vorteilhaften) Materialien bei der Herstellung der Kaffeemaschine ermöglicht.

Das erste Mahlelement und/oder das zweite Mahlelement kann eine Mahlscheibe sein. Hierbei können das erste Mahlelement und das zweite Mahlelement zumindest einen Teil eines Scheibenmahlwerks ausbilden. Alternativ kann das erste Mahlelement und/oder das zweite Mahlelement ein Teil eines Kegelmahlwerks sein. Hierbei können das erste Mahlelement und das zweite Mahlelement zumindest einen Teil eines Kegelmahlwerks ausbilden.

In dem erfindungsgemäßen Verfahren kann die Bestimmung der Höhenänderung des Mahlspalts in Abhängigkeit von der Temperatur die folgenden Schritte umfassen:

i) Bestimmung einer ersten Höhe der Mahlspalts bei einer ersten Temperatur, wobei die erste Temperatur bevorzugt 20 °C beträgt;

ii) Bestimmung einer zweiten Höhe des Mahlspalts bei einer zweiten Temperatur, wobei die zweite Temperatur höher ist als die erste Temperatur, wobei die zweite Temperatur bevorzugt 50 °C, besonders bevorzugt 60 °C, ganz besonders bevorzugt 70 °C, insbesondere 80 °C beträgt;

iii) Bestimmung einer Differenz der zweiten Höhe des Mahlspalts zur ersten Höhe des Mahlspalts;

iv) Bestimmung der Höhenänderung des Mahlspalts in Abhängigkeit von der Temperatur nach folgender Formel:

$$\text{Höhenänderung } [\mu m/K] = \Delta h \, [\mu m] : \Delta T \, [K]$$

wobei

$\Delta h \, [\mu m]$ = Differenz der zweiten Höhe des Mahlspalts zur ersten Höhe des Mahlspalts; und
$\Delta T \, [K]$ = Differenz der zweiten Temperatur zur ersten Temperatur.

Ferner kann in dem erfindungsgemäßen Verfahren die Bestimmung der Höhenänderung des Mahlspalts in Abhängigkeit von der Temperatur die folgenden Schritte umfassen:

i) Ermittlung einer Ausdehnung von jedem Bauteil der ersten Bauteilgruppe nach der Formel

$$\text{Ausdehnung } [\mu m/K] = L_1 \, [m] \cdot \alpha \, [\mu m/m \cdot K]$$

wobei

$L_1 \, [m]$ = Länge vom jeweiligen Bauteil der ersten Bauteilgruppe, in Richtung der Drehachse von zumindest einem der Mahlelemente; und
$\alpha \, [\mu m/m \cdot K]$ = spezifischer Wärmeausdehnungskoeffizient vom jeweiligen Bauteil der ersten Bauteilgruppe;

ii) Bestimmung einer ersten mathematischen Summe aus der Ausdehnung von jedem Bauteil der ersten Bauteilgruppe;

iii) Ermittlung einer Ausdehnung von jedem Bauteil der zweiten Bauteilgruppe nach der Formel

$$\text{Ausdehnung } [\mu m/K] = L_2 \, [m] \cdot \alpha \, [\mu m/m \cdot K]$$

wobei

$L_2 \, [m]$ = Länge vom jeweiligen Bauteil der zweiten Bauteilgruppe, in Richtung der Drehachse von zumindest einem der Mahlelemente; und
$\alpha \, [\mu m/m \cdot K]$ = spezifischer Wärmeausdehnungskoeffizient vom jeweiligen Bauteil der zweiten Bauteilgruppe;

iv) Bestimmung einer zweiten mathematischen Summe aus der Ausdehnung von jedem Bauteil der zweiten Bauteilgruppe; und

v) Bestimmung der Höhenänderung des Mahlspalts in Abhängigkeit von der Temperatur durch Ausbilden der Differenz zwischen der ersten mathematischen Summe und der zweiten mathematischen Summe.

In dem Verfahren kann die bestimmte Höhe für zumindest ein Bauteil der ersten und/oder zweiten Bauteilgruppe dergestalt ausgewählt werden, dass die Höhenänderung des Mahlspalts in Abhängigkeit von der Temperatur ≤ 0,25

μm/K, bevorzugt ≤ 0,20 μm/K, besonders bevorzugt ≤ 0,15 μm/K, ganz besonders bevorzugt ≤ 0,10 μm/K, insbesondere ≤ 0,05 μm/K, optional 0 μm/K, beträgt.

Ferner kann in dem Verfahren das bestimmte Material für zumindest ein Bauteil der ersten und/oder zweiten Bauteilgruppe dergestalt ausgewählt werden, dass die Höhenänderung des Mahlspalts in Abhängigkeit von der Temperatur ≤ 0,25 μm/K, bevorzugt ≤ 0,20 μm/K, besonders bevorzugt ≤ 0,15 μm/K, ganz besonders bevorzugt ≤ 0,10 μm/K, insbesondere ≤ 0,05 μm/K, optional 0 μm/K, beträgt.

Abgesehen davon kann in dem Verfahren die bestimmte Höhe und/oder das bestimmte Material für ein Kompensationselement dergestalt ausgewählt werden, dass die Höhenänderung des Mahlspalts in Abhängigkeit von der Temperatur ≤ 0,25 μm/K, bevorzugt ≤ 0,20 μm/K, besonders bevorzugt ≤ 0,15 μm/K, ganz besonders bevorzugt ≤ 0,10 μm/K, insbesondere ≤ 0,05 μm/K, optional 0 μm/K, beträgt.

Die erste Bauteilgruppe kann so gewählt werden, dass sie (durch thermische Ausdehnung) eine Vergrößerung der Höhe des Mahlspalts in Abhängigkeit von einer Temperaturerhöhung der ersten Bauteilgruppe bewirkt (d.h. die Gesamtheit der Bauteile der ersten Bauteilgruppe können so gewählt werden, dass sie bei einer Temperaturerhöhung eine Vergrößerung der Höhe des Mahlspalts bewirken).

Die erste Bauteilgruppe kann ein Mühlengehäuse und/oder ein Motorgehäuse der Kaffeemühle umfassen, bevorzugt sowohl ein Mühlengehäuse und/oder ein Motorgehäuse der Kaffeemühle umfassen.

Das Mühlengehäuse kann mit dem ersten Mahlelement einerseits und dem Motorengehäuse andererseits verbunden sein.

Das erste Mahlelement kann ferritischen Stahl und/oder eine Keramik (z.B. eine $Al_2O_3$-Keramik) enthalten oder daraus bestehen. Ferner kann das erste Mahlelement eine Höhe, in Richtung der Drehachse von zumindest einem der Mahlelemente, im Bereich von 5 bis 10 mm, bevorzugt im Bereich von 7 bis 9 mm, aufweisen.

Das Mühlengehäuse kann Aluminium, ferritischen Stahl und/oder eine Keramik (z.B. eine $Al_2O_3$-Keramik) enthalten oder daraus bestehen, bevorzugt ferritischen Stahl enthalten oder daraus bestehen. Ferner kann das Mühlengehäuse eine Höhe, in Richtung der Drehachse von zumindest einem der Mahlelemente, im Bereich von 15 bis 30 mm, bevorzugt im Bereich von 20 bis 25 mm, aufweisen.

Das Motorgehäuse kann Aluminium und/oder eine Keramik (z.B. eine $Al_2O_3$-Keramik) enthalten oder daraus bestehen. Ferner kann das Motorgehäuse eine Höhe, in Richtung der Drehachse von zumindest einem der Mahlelemente, im Bereich von 40 bis 80 mm, bevorzugt im Bereich von 50 bis 70 mm, aufweisen.

Die zweite Bauteilgruppe kann so gewählt werden, dass sie (durch thermische Ausdehnung) eine Verkleinerung der Höhe des Mahlspalts in Abhängigkeit von einer Temperaturerhöhung der zweiten Bauteilgruppe bewirkt (d.h. die Gesamtheit der Bauteile der zweiten Bauteilgruppe können so gewählt werden, dass sie bei einer Temperaturerhöhung eine Verkleinerung der Höhe des Mahlspalts bewirken).

Die zweite Bauteilgruppe kann einen mit dem zweiten Mahlelement verbundenen Mahlelementträger, eine Motorwelle und/oder einen Motorwellen-Lagersitz umfassen, bevorzugt sowohl einen mit dem zweiten Mahlelement verbundenen Mahlelementträger, eine Motorwelle und einen Motorwellen-Lagersitz umfassen.

Die Motorwelle kann mit dem Mahlelementträger einerseits und mit dem Motorwellen-Lagersitz andererseits verbunden sein.

Das zweite Mahlelement kann ferritischen Stahl und/oder eine Keramik (z.B. eine $Al_2O_3$-Keramik) enthalten oder daraus bestehen. Ferner kann das zweite Mahlelement eine Höhe, in Richtung der Drehachse von zumindest einer der Mahlelemente, im Bereich von 5 bis 10 mm, bevorzugt im Bereich von 7 bis 9 mm, aufweisen.

Der Mahlelementträger kann Aluminium enthalten oder daraus bestehen. Ferner kann der Mahlelementträger eine Höhe, in Richtung der Drehachse von zumindest einem der Mahlelemente, im Bereich von 2 bis 8 mm, bevorzugt im Bereich von 4 bis 6 mm, aufweisen.

Die Motorwelle kann austenitischen Stahl enthalten oder daraus bestehen. Ferner kann die Motorwelle eine Höhe, in Richtung der Drehachse von zumindest einem der Mahlelemente, im Bereich von 40 bis 70 mm, bevorzugt im Bereich von 50 bis 60 mm, aufweisen.

Der Motorwellen-Lagersitz kann Aluminium enthalten oder daraus bestehen. Ferner kann der Motorwellen-Lagersitz eine Höhe, in Richtung der Drehachse von zumindest einem der Mahlelemente, im Bereich von 1 bis 5 mm, bevorzugt im Bereich von 2 bis 4 mm, aufweisen.

In dem Verfahren kann ein Kompensationselement eingesetzt werden, das einen Kunststoff enthält oder daraus besteht. Kunststoff hat den Vorteil eines relativ hohen spezifischen Wärmeausdehnungskoeffizienten. Dies bedeutet, dass die Höhe des Kompensationselements gering ausfallen kann, wodurch die Kaffeemühle sehr kompakt bereitgestellt werden kann. Kunststoff hat den zusätzlichen Vorteil, dass er eine relativ geringe spezifische Dichte aufweist, wodurch das Gewicht des Kompensationselements und damit der Kaffeemühle gering ausfallen kann. Ferner hat Kunststoff den weiteren Vorteil, dass er ein relativ kostengünstiges Material ist, wodurch die Kaffeemühle kostengünstiger und damit ökonomischer bereitgestellt werden kann.

Der Kunststoff ist bevorzugt ein thermoplastischer Kunststoff. Der Kunststoff ist besonders bevorzugt ausgewählt aus der Gruppe bestehend aus Polyphenylensulfid (PPS), Polycarbonat (PC), Polyamid (PA), Polypropylen (PP), HD-Polyethylen (HDPE) und Kombinationen hiervon. Insbesondere ist der Kunststoff Polyphenylensulfid (PPS). PPS ist vorteilhaft, da es nicht nur einen relativ hohen spezifischen Wärmeausdehnungskoeffizienten aufweist (50 μm/m·K), sondern auch vorteilhafte mechanische Eigenschaften aufweist. Damit ist das Kompensationselement langlebig und kann die Kompensationswirkung bereits in mit relativen kleinen Abmessungen (d.h. einer geringen Höhe) erzielen. HD-PE ist vorteilhaft, da die Höhe des Kompensationselements aufgrund der hohen spezifischen Wärmeausdehnung von HDPE (200 μm/m·K) sehr gering ausfallen kann und damit die Kaffeemühle sehr kompakt und kostengünstig bereitgestellt werden kann. HDPE hat jedoch gegenüber PPS nachteilige mechanische Eigenschaften.

Ferner kann das Kompensationselement einen Wärmeausdehnungskoeffizienten von ≥ 40 μm/m·K, bevorzugt ≥ 50 μm/m·K, aufweisen. Je höher der spezifische Wärmeausdehnungskoeffizient ist, desto geringer können die Abmessungen (d.h. die Höhe) des Kompensationselements ausfallen, um die gewünschte Kompensationswirkung zu erreichen.

Das erfindungsgemäße Verfahren kann dadurch gekennzeichnet sein, dass die Kaffeemühle nicht mit einer Steuereinheit ausgestattet wird, die zur Korrektur einer Temperatur-bedingten Änderung des Mahlgrads konfiguriert ist.

Erfindungsgemäß wird ferner eine Kaffeemühle bereitgestellt, enthaltend oder bestehend aus:

a) eine erste Bauteilgruppe einer Kaffeemühle, die ein mit der ersten Bauteilgruppe verbundenes, erstes Mahlelement aufweist;

b) eine zweite Bauteilgruppe einer Kaffeemühle, die ein mit der zweiten Bauteilgruppe verbundenes, zweites Mahlelement aufweist, wobei die erste Bauteilgruppe mit der zweiten Bauteilgruppe zu einer Kaffeemühle verbunden sind, wobei das erste Mahlelement über dem zweiten Mahlelement angeordnet ist und zwischen dem ersten und zweiten Mahlelement ein Mahlspalt ausgebildet ist, wobei der Mahlspalt eine Höhe aufweist;

c) optional: ein Kompensationselement an der ersten und/oder zweiten Bauteilgruppe;

dadurch gekennzeichnet, dass eine Höhenänderung des Mahlspalts der Kaffeemühle in Abhängigkeit von der Temperatur ≤ 0,30 μm/K beträgt.

Bei der erfindungsgemäßen Kaffeemühle kann die Höhenänderung des Mahlspalts in Abhängigkeit von der Temperatur ≤ 0,25 μm/K, bevorzugt ≤ 0,20 μm/K, besonders bevorzugt ≤ 0,15 μm/K, ganz besonders bevorzugt ≤ 0,10 μm/K, insbesondere ≤ 0,05 μm/K, optional 0 μm/K, betragen. Je kleiner die Höhenänderung des Mahlspalts in Abhängigkeit von der Temperatur ist, desto besser kann sichergestellt werden, dass während eines Betriebs der Kaffeemühle ein gewünschter Mahlgrad von Kaffee möglichst gleich gehalten wird.

Die erste Bauteilgruppe der Kaffeemühle kann geeignet sein, (durch thermische Ausdehnung) eine Vergrößerung der Höhe des Mahlspalts in Abhängigkeit von einer Temperaturerhöhung der ersten Bauteilgruppe zu bewirken (d.h. die Gesamtheit der Bauteile der ersten Bauteilgruppe kann geeignet sein, bei einer Temperaturerhöhung eine Vergrößerung der Höhe des Mahlspalts zu bewirken).

Die erste Bauteilgruppe der Kaffeemühle kann ein Mühlengehäuse und/oder ein Motorgehäuse der Kaffeemühle umfassen, bevorzugt sowohl ein Mühlengehäuse und ein Motorgehäuse der Kaffeemühle umfassen.

Das Mühlengehäuse der Kaffeemühle kann mit dem ersten Mahlelement einerseits und dem Motorengehäuse andererseits verbunden sein.

Das erste Mahlelement der Kaffeemühle kann ferritischen Stahl und/oder eine Keramik (z.B. eine $Al_2O_3$-Keramik) enthalten oder daraus bestehen. Ferner kann das erste Mahlelement eine Höhe, in Richtung der Drehachse von zumindest einem der Mahlelemente, im Bereich von 5 bis 10 mm, bevorzugt im Bereich von 7 bis 9 mm, aufweisen.

Das Mühlengehäuse der Kaffeemühle kann Aluminium, ferritischen Stahl und/oder eine Keramik (z.B. eine $Al_2O_3$-Keramik) enthalten oder daraus bestehen, bevorzugt ferritischen Stahl enthalten oder daraus bestehen. Ferner kann das Mühlengehäuse eine Höhe, in Richtung der Drehachse von zumindest einem der Mahlelemente, im Bereich von 15 bis 30 mm, bevorzugt im Bereich von 20 bis 25 mm, aufweisen.

Das Motorgehäuse der Kaffeemühle kann Aluminium und/oder eine Keramik (z.B. eine $Al_2O_3$-Keramik) enthalten oder daraus bestehen. Ferner kann das Motorgehäuse eine Höhe, in Richtung der Drehachse von zumindest einem der Mahlelemente, im Bereich von 40 bis 80 mm, bevorzugt im Bereich von 50 bis 70 mm, aufweisen.

Die zweite Bauteilgruppe der Kaffeemühle kann geeignet sein, (durch thermische Ausdehnung) eine Verkleinerung der Höhe des Mahlspalts in Abhängigkeit von einer Temperaturerhöhung der zweiten Bauteilgruppe zu bewirken (d.h. die Gesamtheit der Bauteile der zweiten Bauteilgruppe kann geeignet sein, bei einer Temperaturerhöhung eine Verkleinerung der Höhe des Mahlspalts zu bewirken).

Die zweite Bauteilgruppe kann einen mit dem zweiten Mahlelement verbundenen Mahlelementträger, eine Motorwelle und/oder einen Motorwellen-Lagersitz umfassen, bevorzugt sowohl einen mit dem zweiten Mahlelement verbundenen Mahlelementträger, eine Motorwelle und einen Motorwellen-Lagersitz umfassen.

Die Motorwelle der Kaffeemühle kann mit dem Mahlelementträger einerseits und mit dem Motorwellen-Lagersitz andererseits verbunden sein.

Das zweite Mahlelement der Kaffeemühle kann ferritischen Stahl und/oder eine Keramik (z.B. eine $Al_2O_3$-Ke-

ramik) enthalten oder daraus bestehen. Ferner kann das zweite Mahlelement eine Höhe, in Richtung der Drehachse von zumindest einem der Mahlelemente, im Bereich von 5 bis 10 mm, bevorzugt im Bereich von 7 bis 9 mm, aufweisen.

Der Mahlelementträger der Kaffeemühle kann Aluminium enthalten oder daraus bestehen. Ferner kann der Mahlelementträger eine Höhe, in Richtung der Drehachse von zumindest einem der Mahlelemente, im Bereich von 2 bis 8 mm, bevorzugt im Bereich von 4 bis 6 mm, aufweisen.

Die Motorwelle der Kaffeemühle kann austenitischen Stahl enthalten oder daraus bestehen. Ferner kann die Motorwelle eine Höhe, in Richtung der Drehachse von zumindest einem der Mahlelemente, im Bereich von 40 bis 70 mm, bevorzugt im Bereich von 50 bis 60 mm, aufweisen.

Der Motorwellen-Lagersitz der Kaffeemühle kann Aluminium enthalten oder daraus bestehen. Ferner kann der Motorwellen-Lagersitz eine Höhe, in Richtung der Drehachse von zumindest einem der Mahlelemente, im Bereich von 1 bis 5 mm, bevorzugt im Bereich von 2 bis 4 mm, aufweisen.

Das Kompensationselement kann einen Kunststoff enthalten oder daraus bestehen. Der Kunststoff ist bevorzugt ein thermoplastischer Kunststoff. Besonders bevorzugt ist der Kunststoff ausgewählt aus der Gruppe bestehend aus Polyphenylensulfid (PPS), Polycarbonat (PC), Polyamid (PA), Polypropylen (PP), HD-Polyethylen (HDPE) und Kombinationen hiervon. Insbesondere ist der Kunststoff Polyphenylensulfid (PPS).

Ferner kann das Kompensationselement einen Wärmeausdehnungskoeffizienten von $\geq 40$ $\mu$m/m·K, bevorzugt $\geq 50$ $\mu$m/m·K, aufweisen.

Die erfindungsgemäße Kaffeemühle kann dadurch gekennzeichnet sein, dass sie keine Steuereinheit aufweist, die zur Korrektur einer Temperatur-bedingten Änderung des Mahlgrads konfiguriert ist.

Die erfindungsgemäße Kaffeemühle kann dadurch gekennzeichnet sein, dass sie über das erfindungsgemäße Verfahren hergestellt ist.

Anhand der nachfolgenden Figur und des nachfolgenden Beispiels soll der erfindungsgemäße Gegenstand näher erläutert werden, ohne diesen auf die hier dargestellten, spezifischen Ausführungsformen einschränken zu wollen.

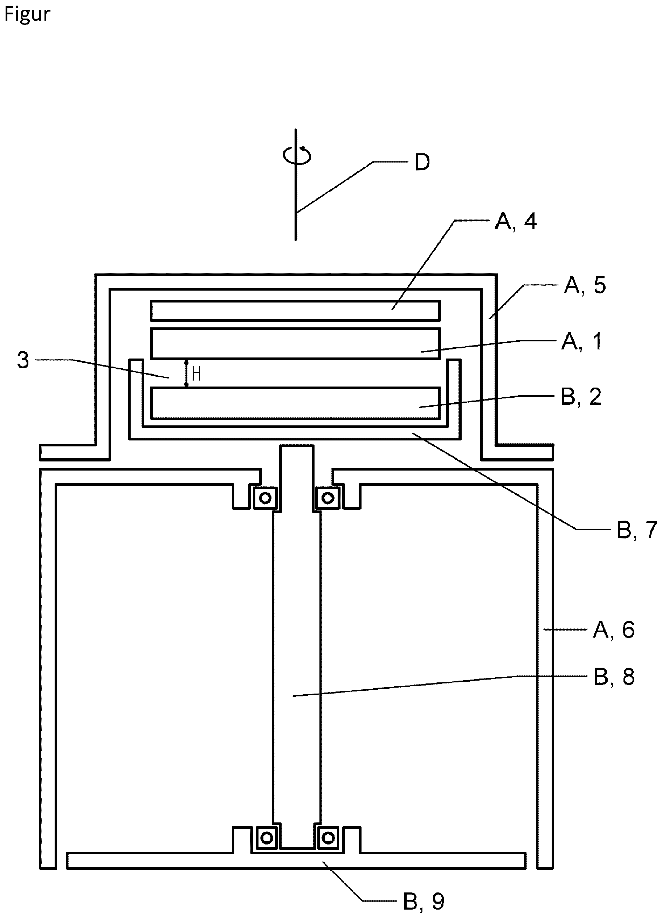

Die Figur zeigt schematisch eine erfindungsgemäße Kaffeemühle. Die Kaffeemühle enthält eine erste Bauteilgruppe A, die ein mit der ersten Bauteilgruppe A verbundenes, erstes Mahlelement A, 1 aufweist und eine zweite Bauteilgruppe B, die ein mit der zweiten Bauteilgruppe B verbundenes, zweites Mahlelement B, 2 aufweist. Die erste Bauteilgruppe A ist mit der zweiten Bauteilgruppe B zu einer Kaffeemühle verbunden. Hierbei ist das erste Mahlelement A, 1 über dem zweiten Mahlelement B, 2 angeordnet ist und zwischen dem ersten Mahlelement A, 1 und zweiten Mahlelement B, 2 ein Mahlspalt 3 ausgebildet ist. Der Mahlspalt 3 weist, in Richtung einer Drehachse D von dem zweiten Mahlelement B, 2, eine Höhe H auf.

Die erste Bauteilgruppe A besteht hier aus einem Mühlengehäuse A, 5 und einem Motorgehäuse A, 6 der Kaffeemühle und ist geeignet, eine Vergrößerung der Höhe H des Mahlspalts 3 in Abhängigkeit von einer Temperaturerhöhung der ersten Bauteilgruppe A zu bewirken. Dies liegt darin begründet, dass sich das Mühlengehäuse A, 5 und das Motorgehäuse A, 6 durch Temperaturerhöhung ausdehnen und sich dadurch ihre Länge, in Richtung einer Drehachse D von dem zweiten Mahlelement B, 2, erhöht. Da das Motorgehäuse A, 6 mit dem Mühlengehäuse A, 5 verbunden ist und das Mühlengehäuse A, 5 mit dem ersten Mahlelement A, 1 verbunden ist, wird dadurch das erste Mahlelement A, 1 angehoben, d.h. bewegt sich vom zweiten Mahlelement B, 2 weg, wodurch der Mahlspalt 3 vergrößert wird bzw. sich die Höhe H des Mahlspalts 3 vergrößert.

Die zweite Bauteilgruppe B besteht hier aus einen mit dem zweiten Mahlelement B, 2 verbundenen Mahlelementträger B, 7, einer Motorwelle B, 8 und einem Motorwellen-Lagersitz B, 9 und ist geeignet, eine Verkleinerung der Höhe H des Mahlspalts 3 in Abhängigkeit von einer Temperaturerhöhung der zweiten Bauteilgruppe B zu bewirken. Dies liegt darin begründet, dass sich der Mahlelementträger B, 7, die Motorwelle B, 8 und der Motorwellen-Lagersitz B, 9 durch Temperaturerhöhung ausdehnen und sich dadurch ihre Länge, in Richtung einer Drehachse D von dem zweiten Mahlelement B, 2, erhöht. Da der Motorwellen-Lagersitz B, 9 mit der Motorwelle B, 8, die Motorwelle B, 8 mit dem Mahlelementträger B, 7 und der Mahlelementträger B, 7 mit dem zweiten Mahlelement B, 2 verbunden ist, wird dadurch das zweite Mahlelement B, 2 angehoben, d.h. bewegt sich zum ersten Mahlelement A, 1 hin, wodurch der Mahlspalt 3 verkleinert wird bzw. sich die Höhe H des Mahlspalts 3 verkleinert.

Da im vorliegenden Fall die temperaturbedingte Vergrößerung des Mahlspalts 3 durch das Mühlengehäuse A, 5 und das Motorgehäuse A, 6 größer ausfällt als die temperaturbedingte Verkleinerung des Mahlspalts 3 durch den Mahlelementträger B, 7, die Motorwelle B, 8 und den Motorwellen-Lagersitz B, 9, ist hier an der ersten Bauteilgruppe, speziell am Mühlengehäuse A, 5, ein Kompensationselement A, 4 aus Kunststoff angeordnet (z.B. eine Kunststoffscheibe). Die temperaturbedingte Ausdehnung des Kompensationselements A, 4 bewirkt, dass sich die Einflüsse der temperaturbedingten Ausdehnung der ersten Bauteilgruppe (A) und der zweiten Bauteilgruppe (B) gegenseitig kompensieren, d.h. dass keine Änderung der Höhe H des Mahlspalts 3 der Kaffeemühle in Abhängigkeit von der Temperatur erfolgt (d.h. Höhenänderung beträgt 0 $\mu$m/K). Anders ausgedrückt kann durch das Kompensationselement A, 4 die Höhe H des Mahlspalts 3 auch bei einer Erwärmung der Bauteilgruppen A, B der Kaffeemühle konstant auf einem eingestellten Wert gehalten werden.

**Beispiel 1** - **Verfahren zur Herstellung einer erfindungsgemäßen Kaffeemühle ohne Kompensationselement**

In diesem Herstellungsbeispiel wird eine Länge und ein Material von Bauteilen der ersten Bauteilgruppe, die eine Vergrößerung der Höhe des Mahlspalts in Abhängigkeit von der Temperatur bewirken, auf eine Länge und ein Material von Bauteilen der zweiten Bauteilgruppe, die eine Verkleinerung der Höhe des Mahlspalts in Abhängigkeit von der Temperatur bewirken, aufeinander abgestimmt. Die Länge bezieht sich auf eine Länge der jeweiligen Bauteile in Richtung der Drehachse von zumindest einer der Mahlscheiben, da eine Länge der Bauteile in diese Richtung einen Einfluss auf eine Temperatur-abhängige Veränderung der Höhe des Mahlspalts nimmt.

Hierbei wird zunächst eine Ausdehnung von jedem Bauteil der ersten Bauteilgruppe nach der Formel

$$\text{Ausdehnung } [\mu m/K] = L_1 \, [m] \cdot \alpha \, [\mu m/m \cdot K]$$

berechnet, wobei

$L_1$ [m] = Länge, in Richtung der Drehachse von zumindest einem der Mahlelemente, vom jeweiligen Bauteil der ersten Bauteilgruppe; und $\alpha$ [$\mu$m/m·K] = spezifischer Wärmeausdehnungskoeffizient vom jeweiligen Bauteil der ersten Bauteilgruppe.

Beispielhafte Längen, Materialien, spezifischen Wärmeausdehnungskoeffizienten und die Ausdehnung der Bauteile der ersten Bauteilgruppe sind in der folgenden Tabelle dargestellt.

1. Beispiel für erste Bauteilgruppe

| 1. Bauteilgruppe | Länge | Material | $\alpha$ (mm/m·K) | Ausdehnung ($\mu$m/K) |
|---|---|---|---|---|
| Motorgehäuse | 74,6 mm | Ferritischer Stahl | 10,0 | 0,746 |
| Mühlengehäuse | 37,1 mm | Ferritischer Stahl | 10,0 | 0,372 |
| | | | $\Sigma$ = | 1,118 |

2. Beispiel für erste Bauteilgruppe

| 1. Bauteilgruppe | Länge | Material | $\alpha$ (mm/m·K) | Ausdehnung ($\mu$m/K) |
|---|---|---|---|---|
| Motorgehäuse | 74,6 mm | Ferritischer Stahl | 10,0 | 0,746 |
| Mühlengehäuse | 43,8 mm | $Al_2O_3$-Keramik | 8,5 | 0,372 |
| | | | $\Sigma$ = | 1,118 |

In diesen beiden Beispielen ergibt sich somit für die erste Bauteilgruppe (bzw. für die Gesamtheit ihrer Bauteile) eine thermische Ausdehnung von 1,118 $\mu$m/K. Basierend auf dieser Information können die Längen und Materialien der Bauteile der zweiten Bauteilgruppe so gewählt werden, dass sie in ihrer Gesamtheit ebenfalls eine thermische Ausdehnung von 1,118 $\mu$m/K aufweisen. Da die erste Bauteilgruppe eine Vergrößerung des Mahlspalts in Abhängigkeit von der Temperatur bewirkt und die zweite Bauteilgruppe eine Verkleinerung des Mahlspalts in Abhängigkeit von der Temperatur bewirkt, kompensieren sich in diesem Fall beide Ausdehnungen, sodass die Ausdehnung des Mahlspalts (bzw. die Änderung der Höhe des Mahlspalts) 0 $\mu$m/K beträgt, sich also die Höhe des Mahlspalts nicht temperaturbedingt verändert.

Beispiele für mögliche Längen, Materialien, spezifische Wärmeausdehnungskoeffizienten und Ausdehnungen der Bauteile der zweiten Bauteilgruppe sind in den folgenden Tabellen dargestellt.

1. Beispiel für die zweite Bauteilgruppe

| 2. Bauteilgruppe | Länge | Material | $\alpha$ ($\mu$m/m·K) | Ausdehnung ($\mu$m/K) |
|---|---|---|---|---|
| Lagersitz Motorwelle | 3 mm | Aluminium | 23,8 | 0,071 |
| Motorwelle | 53,5 mm | Austenitischer Stahl | 16,0 | 0,857 |
| Mahlscheibenträger | 4,5 mm | Aluminium | 23,8 | 0,107 |
| Mahlscheiben | 8,4 mm | Ferritischer Stahl | 10,0 | 0,083 |
| | | | $\Sigma =$ | 1,118 |

2. Beispiel für die zweite Bauteilgruppe

| 2. Bauteilgruppe | Länge | Material | $\alpha$ ($\mu$m/m·K) | Ausdehnung ($\mu$m/K) |
|---|---|---|---|---|
| Lagersitz Motorwelle | 3 mm | Aluminium | 23,8 | 0,071 |
| Motorwelle | 53,5 mm | Austenitischer Stahl | 16,0 | 0,857 |
| Mahlscheibenträger | 4,5 mm | Aluminium | 23,8 | 0,107 |
| Mahlscheiben | 9,2 mm | $ZrO_2$-$Al_2O_3$-Misch-keramik | 9,0 | 0,083 |
| | | | $\Sigma =$ | 1,118 |

Es ist aus diesen Tabellen ersichtlich, dass über die Wahl der Längen der Bauteile und ihrer Materialien die Ausdehnung der zweiten Bauteilgruppe an die Ausdehnung der ersten Bauteilgruppe angepasst werden kann, sodass sich die gleiche Ausdehnung ergibt. Dadurch kann sichergestellt werden, dass der Mahlspalt keine Veränderung seiner Höhe in Abhängigkeit von der Temperatur erfährt (Ausdehnung Mahlspalt = 0 $\mu$m/K).

**Beispiel 2 - Verfahren zur Herstellung einer erfindungsgemäßen Kaffeemühle mit Kompensationselement**

Anders als im Beispiel 1 kann ein Wunsch bestehen, beispielsweise die Länge des Motorgehäuses und/oder des Mühlengehäuses kürzer ausfallen zu lassen, um die Kaffeemühle in der Höhe kompakter auszugestalten. Ferner kann ein Wunsch bestehen, das Motorgehäuse aus Aluminium anstelle von ferritischem Stahl zu fertigen, damit die Kaffeemühle ein geringeres Gewicht aufweist.

Beispiele für gewünschte Längen, Materialien, spezifische Wärmeausdehnungskoeffizienten und Ausdehnungen der Bauteile der ersten Bauteilgruppe und der zweiten Bauteilgruppe sind in den folgenden Tabellen dargestellt.

| 1. Bauteilgruppe | Länge | Material | $\alpha$ (mm/m·K) | Ausdehnung ($\mu$m/K) |
|---|---|---|---|---|
| Motorgehäuse | 59,5 mm | Aluminium | 23,8 | 1,417 |
| Mühlengehäuse | 23,5 mm | Ferritischer Stahl | 10,0 | 0,235 |
| | | | $\Sigma =$ | 1,652 |

| 2. Bauteilgruppe | Länge | Material | $\alpha$ ($\mu$m/m·K) | Ausdehnung ($\mu$m/K) |
|---|---|---|---|---|
| Lagersitz Motorwelle | 3 mm | Aluminium | 23,8 | 0,055 |
| Motorwelle | 53,5 mm | Austenitischer Stahl | 16,0 | 0,857 |
| Mahlscheibenträger | 4,5 mm | Aluminium | 23,8 | 0,107 |
| Mahlscheiben | 8,4 mm | Ferritischer Stahl | 10,0 | 0,083 |
| | | | $\Sigma =$ | 1,118 |

Aus den oben genannten Tabellen ergibt sich, dass die erste Bauteilgruppe eine größere thermische Ausdehnung in Abhängigkeit von der Temperatur aufweist als die zweite Bauteilgruppe.

Dies liegt im Wesentlichen daran, dass das Motorgehäuse aus Aluminium besteht und Aluminium einen höheren spezifischen Wärmeausdehnungskoeffizienten aufweist als der ferritischer Stahl als Material für das Motorgehäuse (siehe Beispiel 1). Die kürzere Ausgestaltung der Länge sowohl des Motorgehäuses als auch des Mühlengehäuses können diesen großen Einfluss von Aluminium als Material für das Motorgehäuse nicht kompensieren, d.h. den Wert der Ausdehnung nicht auf 1,118 μm/K verringern. Eine noch stärkere Reduktion der Länge des Motorgehäuses und/oder des Mühlengehäuses kann entweder unerwünscht oder sogar unmöglich sein.

Da die erste Bauteilgruppe für eine Vergrößerung der Höhe des Mahlspalts in Abhängigkeit von der Temperatur verantwortlich ist, würde sich daher bei einer solchen Kaffeemühle der Mahlspalt in Abhängigkeit von der Temperatur vergrößern und zwar konkret um 1,652 μm/K - 1,118 μm/K = 0,534 μm/K.

Um diesen Effekt auf eine andere Art und Weise als beispielsweise eine weitere Reduktion der Länge des Motorgehäuses und/oder Mühlengehäuses zu kompensieren, kann die Ausdehnung der zweiten Bauteilgruppe angehoben werden, hier um 0,534 μm/K auf den Wert 1,652 μm/K der ersten Bauteilgruppe.

Dies kann durch ein Kompensationselement geschehen, das an der zweiten Bauteilgruppe angebracht wird. Besagtes Kompensationselement müsste also eine Ausdehnung in Abhängigkeit von der Temperatur von 0,534 μm/K aufweisen. Prinzipiell kommen hierfür alle denkbaren Materialien und Längen für das Kompensationselement in Betracht.

Soll das Kompensationselement aus einem bestimmten Material (mit einem bestimmten spezifischen Wärmeausdehnungskoeffizienten) bestehen, kann die nötige Höhe des Kompensationselements (bzw. Länge des Kompensationselements in Richtung der Drehachse von zumindest einer der Mahlscheiben) über die folgende Formel berechnet werden:

$$L\ [\text{m}] = \text{Gewünschte Ausdehnung } [\mu\text{m/K}] : \alpha\ [\mu\text{m/m·K}]$$

wobei

L = Länge, in Richtung der Drehachse von zumindest einer der Mahlscheiben, vom Kompensationselement
$\alpha$ = spezifischer Wärmeausdehnungskoeffizient vom jeweiligen Bauteil der zweiten Bauteilgruppe
Gewünschte Ausdehnung = Differenz der Ausdehnung in Abhängigkeit von der Temperatur zwischen der ersten Bauteilgruppe und der zweiten Bauteilgruppe (hier: 0,534 μm/K).

Ist beispielsweise das Ziel, die Höhe des Kompensationselements, d.h. seine Länge in Richtung der Drehachse von zumindest einer der Mahlscheiben, gering ausfallen zu lassen, um eine in der Höhe möglichst kompakte Kaffeemühle bereitzustellen, so ist es vorteilhaft, das Kompensationselement aus einem Material zu wählen, das einen relativ hohen spezifischen Wärmeausdehnungskoeffizienten aufweist. Als Beispiel bieten sich hier Kunststoffe an, da Kunststoffe einen relativ hohen spezifischen Wärmeausdehnungskoeffizienten aufweisen.

Beispiele für mögliche Kunststoffe sind in der folgenden Tabelle aufgeführt, wobei aus der Tabelle ersichtlich ist, dass die nötige Höhe des Kompensationselements (bzw. dessen Länge in Richtung der Drehachse von zumindest einer der Mahlscheiben) aus Kunststoff von dem spezifischen Wärmeausdehnungskoeffizienten des Kunststoffs abhängt.

| Material des Kompensationselements | $\alpha$ ($\mu$m/m·K) | Erforderliche Ausdehnung ($\mu$m/K) | Erforderliche Länge des Kompensationselements (mm) |
|---|---|---|---|
| Polyphenylensulfid (PPS) | 50 | 0,534 | 10,7 |
| Polycarbonat (PC) | 70 | 0,534 | 7,6 |
| Polyamid (PA) | 100 | 0,534 | 5,3 |
| Polypropylen (PP) | 150 | 0,534 | 3,6 |
| HD-Polyethylen (HDPE) | 200 | 0,534 | 2,7 |

Soll das Kompensationselement eine bestimmte Länge aufweisen, kann das nötige Material, aus dem das Kompensationselement bestehen muss, über die folgende Formel berechnet werden, d.h. genauer gesagt kann der nötige spezifische Wärmeausdehnungskoeffizient bestimmt werden, den das Material aufweisen muss:

$$\alpha\ [\mu\text{m/m·K}] = \text{Gewünschte Ausdehnung } [\mu\text{m/K}] : L\ [\text{m}]$$

wobei
L = Länge, in Richtung der Drehachse von zumindest einer der Mahlscheiben, vom Kompensationselement

$\alpha$ = spezifischer Wärmeausdehnungskoeffizient vom jeweiligen Bauteil der zweiten Bauteilgruppe

Gewünschte Ausdehnung = Differenz der Ausdehnung in Abhängigkeit von der Temperatur zwischen der ersten Bauteilgruppe und der zweiten Bauteilgruppe. Ist beispielsweise das Ziel, dass das Kompensationselement eine Länge von nur 3,7 mm oder 2,8 mm aufweist, so kann der hierfür nötige spezifische Wärmeausdehnungskoeffizient und damit ein geeignetes Material bestimmt werden, aus dem das Kompensationselement bestehen muss.

| Gewünschte Länge des Kompensationselements (mm) | Erforderliche Ausdehnung ($\mu$m/K) | Nötiges $\alpha$ ($\mu$m/m·K) | Mögliches Material des Kompensationselements mit diesem $\alpha$ |
|---|---|---|---|
| 3,6 | 0,534 | 150 | Polypropylen (PP) |
| 2,7 | 0,534 | 200 | HD-Polyethylen (HDPE) |

Das Kompensationselement kann beispielsweise an dem Mahlelement der zweiten Bauteilgruppe (= zweites Mahlelement) angebracht werden, bevorzugt zwischen dem Mahlelement und dem Mühlengehäuse. Alternativ kann das Kompensationselement beispielsweise zwischen dem Mühlengehäuse und dem Motorgehäuse angebracht werden.

Entscheidend ist lediglich, dass das Kompensationselement dergestalt mit der zweiten Bauteilgruppe verbunden wird, dass die Höhe des Kompensationselements einen Einfluss auf eine Veränderung der Höhe des Mahlspalts in Abhängigkeit von der Temperatur nehmen kann.

Bezugszeichenliste

A: erste Bauteilgruppe;
B: zweite Bauteilgruppe;
D: Drehachse von zumindest einem der Mahlelemente;
H: Höhe des Mahlspalts;
1: erstes Mahlelement (z.B. erste Mahlscheibe);
2: zweites Mahlelement (z.B. zweite Mahlscheibe);
3: Mahlspalt;
4: Kompensationselement
5: Mühlengehäuse;
6: Motorgehäuse;
7: Mahlelementträger (z.B. Mahlscheibenträger);
8: Motorwelle;
9: Motorwellen-Lagersitz.

**Patentansprüche**

**1.** Verfahren zur Herstellung einer Kaffeemühle, umfassend die folgenden Schritte oder bestehend daraus:

a) Bereitstellen einer ersten Bauteilgruppe (A) einer Kaffeemühle, die ein mit der ersten Bauteilgruppe (A) verbundenes, erstes Mahlelement (A, 1) aufweist;
b) Bereitstellen einer zweiten Bauteilgruppe (B) einer Kaffeemühle, die ein mit der zweiten Bauteilgruppe verbundenes, zweites Mahlelement (B, 2) aufweist;
c) Verbinden der ersten Bauteilgruppe (A) mit der zweiten Bauteilgruppe (B) zu einer Kaffeemühle, wobei das erste Mahlelement (A, 1) über dem zweiten Mahlelement (B, 2) angeordnet wird und sich zwischen dem ersten Mahlelement (A, 1) und zweiten Mahlelement (B, 2) ein Mahlspalt (3) ausbildet, wobei der Mahlspalt (3) eine Höhe (H) aufweist; und
d) Bestimmung einer Höhenänderung des Mahlspalts in Abhängigkeit von der Temperatur;

**dadurch gekennzeichnet, dass** bei dem Bereitstellen der ersten Bauteilgruppe (A) und/oder der zweiten Bauteilgruppe (B) mindestens einer der folgenden Maßnahmen durchgeführt wird, um zu bewirken, dass eine Höhenänderung des Mahlspalts (3) der Kaffeemühle in Abhängigkeit von der Temperatur $\leq$ 0,30 $\mu$m/K beträgt:

- Auswahl einer bestimmten Höhe für zumindest ein Bauteil der ersten Bauteilgruppe (A) und/oder der zweiten Bauteilgruppe (B), wobei sich die bestimmte Höhe auf eine Länge in Richtung der Drehachse (D) von zumindest einem der Mahlelemente bezieht;
- Auswahl eines bestimmten Materials für zumindest ein Bauteil der ersten Bauteilgruppe (A) und/oder zweiten Bauteilgruppe (B); und
- Auswahl einer bestimmten Höhe und/oder eines bestimmten Materials für ein Kompensationselement (4), das mit der ersten Bauteilgruppe (A) und/oder zweiten Bauteilgruppe (B) verbunden wird, wobei sich die bestimmte Höhe auf eine Länge in Richtung der Drehachse (D) von zumindest einem der Mahlelemente bezieht.

2. Verfahren gemäß dem vorhergehenden Anspruch, **dadurch gekennzeichnet, dass** die Bestimmung der Höhenänderung des Mahlspalts (3) in Abhängigkeit von der Temperatur die folgenden Schritte umfasst:

i) Bestimmung einer ersten Höhe (H) der Mahlspalts (3) bei einer ersten Temperatur, wobei die erste Temperatur bevorzugt 20 °C beträgt;
ii) Bestimmung einer zweiten Höhe (H) des Mahlspalts (3) bei einer zweiten Temperatur, wobei die zweite Temperatur höher ist als die erste Temperatur, wobei die zweite Temperatur bevorzugt 50 °C, besonders bevorzugt 60 °C, ganz besonders bevorzugt 70 °C, insbesondere 80 °C beträgt;
iii) Bestimmung einer Differenz der zweiten Höhe (H) des Mahlspalts (3) zur ersten Höhe (H) des Mahlspalts (3);
iv) Bestimmung der Höhenänderung des Mahlspalts (3) in Abhängigkeit von der Temperatur nach folgender Formel:

$$\text{Höhenänderung } [\mu m/K] = \Delta h \ [\mu m] : \Delta T \ [K]$$

wobei

$\Delta h \ [\mu m]$ = Differenz der zweiten Höhe (H) des Mahlspalts (3) zur ersten Höhe (H) des Mahlspalts (3); und
$\Delta T \ [K]$ = Differenz der zweiten Temperatur zur ersten Temperatur.

3. Verfahren gemäß einem der vorhergehenden Ansprüche, **dadurch gekennzeichnet, dass** die Bestimmung der Höhenänderung des Mahlspalts (3) in Abhängigkeit von der Temperatur die folgenden Schritte umfasst:

i) Ermittlung einer Ausdehnung von jedem Bauteil der ersten Bauteilgruppe (A) nach der Formel

$$\text{Ausdehnung } [\mu m/K] = L_1 \ [m] \cdot \alpha \ [\mu m/m \cdot K]$$

wobei

$L_1 \ [m]$ = Länge vom jeweiligen Bauteil der ersten Bauteilgruppe (A), in Richtung der Drehachse (D) von zumindest einem der Mahlelemente (B, 2); und
$\alpha \ [\mu m/m \cdot K]$ = spezifischer Wärmeausdehnungskoeffizient vom jeweiligen Bauteil der ersten Bauteilgruppe (A);

ii) Bestimmung einer ersten mathematischen Summe aus der Ausdehnung von jedem Bauteil der ersten Bauteilgruppe (A);
iii) Ermittlung einer Ausdehnung von jedem Bauteil der zweiten Bauteilgruppe (B) nach der Formel

$$\text{Ausdehnung } [\mu m/K] = L_2 \ [m] \cdot \alpha \ [\mu m/m \cdot K]$$

wobei

$L_2 \ [m]$ = Länge vom jeweiligen Bauteil der zweiten Bauteilgruppe (B), in Richtung der Drehachse (D) von zumindest einem der Mahlelemente (B, 2); und
$\alpha \ [\mu m/m \cdot K]$ = spezifischer Wärmeausdehnungskoeffizient vom jeweiligen Bauteil der zweiten Bauteilgruppe;

iv) Bestimmung einer zweiten mathematischen Summe aus der Ausdehnung von jedem Bauteil der zweiten Bauteilgruppe (B); und

v) Bestimmung der Höhenänderung des Mahlspalts (3) in Abhängigkeit von der Temperatur durch Ausbilden der Differenz zwischen der ersten mathematischen Summe und der zweiten mathematischen Summe.

4. Verfahren gemäß einem der vorhergehenden Ansprüche, **dadurch gekennzeichnet, dass** die bestimmte Höhe für zumindest ein Bauteil der ersten Bauteilgruppe (A) und/oder zweiten Bauteilgruppe (B) dergestalt ausgewählt wird, dass die Höhenänderung des Mahlspalts (3) in Abhängigkeit von der Temperatur ≤ 0,25 µm/K, bevorzugt ≤ 0,20 µm/K, besonders bevorzugt ≤ 0,15 µm/K, ganz besonders bevorzugt ≤ 0,10 µm/K, insbesondere ≤ 0,05 µm/K, optional 0 µm/K, beträgt.

5. Verfahren gemäß einem der vorhergehenden Ansprüche, **dadurch gekennzeichnet, dass** das bestimmte Material für zumindest ein Bauteil der ersten Bauteilgruppe (A) und/oder zweiten Bauteilgruppe (B) dergestalt ausgewählt wird, dass die Höhenänderung des Mahlspalts (3) in Abhängigkeit von der Temperatur ≤ 0,25 µm/K, bevorzugt ≤ 0,20 µm/K, besonders bevorzugt ≤ 0,15 µm/K, ganz besonders bevorzugt ≤ 0,10 µm/K, insbesondere ≤ 0,05 µm/K, optional 0 µm/K, beträgt.

6. Verfahren gemäß einem der vorhergehenden Ansprüche, **dadurch gekennzeichnet, dass** die bestimmte Höhe und/oder das bestimmte Material für ein Kompensationselement (A, 4) dergestalt ausgewählt wird, dass die Höhenänderung des Mahlspalts (3) in Abhängigkeit von der Temperatur ≤ 0,25 µm/K, bevorzugt ≤ 0,20 µm/K, besonders bevorzugt ≤ 0,15 µm/K, ganz besonders bevorzugt ≤ 0,10 µm/K, insbesondere ≤ 0,05 µm/K, optional 0 µm/K, beträgt.

7. Verfahren gemäß einem der vorhergehenden Ansprüche, **dadurch gekennzeichnet, dass** die erste Bauteilgruppe (A) so gewählt wird, dass sie eine Vergrößerung der Höhe (H) des Mahlspalts (3) in Abhängigkeit von einer Temperaturerhöhung der ersten Bauteilgruppe (A) bewirkt, wobei die erste Bauteilgruppe (A) bevorzugt ein Mühlengehäuse (A, 5) und/oder ein Motorgehäuse (A, 6) der Kaffeemühle umfasst, wobei besonders bevorzugt

i) das Mühlengehäuse (A, 5) mit dem ersten Mahlelement (A, 1) einerseits und dem Motorengehäuse (A, 6) andererseits verbunden ist; und/oder
ii) das erste Mahlelement (A, 1) ferritischen Stahl und/oder eine Keramik enthält oder daraus besteht und/oder eine Höhe, in Richtung der Drehachse (D) von zumindest einem der Mahlelemente (B, 2), im Bereich von 5 bis 10 mm, bevorzugt im Bereich von 7 bis 9 mm, aufweist; und/oder
iii) das Mühlengehäuse (A, 5) Aluminium, ferritischen Stahl und/oder eine Keramik enthält oder daraus besteht, bevorzugt ferritischen Stahl enthält oder daraus besteht, und/oder eine Höhe, in Richtung der Drehachse (D) von zumindest einem der Mahlelemente (B, 2), im Bereich von 15 bis 30 mm, bevorzugt im Bereich von 20 bis 25 mm, aufweist; und/oder
iv) das Motorgehäuse (A, 6) Aluminium und/oder eine Keramik enthält oder daraus besteht und/oder eine Höhe, in Richtung der Drehachse (D) von zumindest einem der Mahlelemente (B, 2), im Bereich von 40 bis 80 mm, bevorzugt im Bereich von 50 bis 70 mm, aufweist.

8. Verfahren gemäß einem der vorhergehenden Ansprüche, **dadurch gekennzeichnet, dass** die zweite Bauteilgruppe (B) so gewählt wird, dass sie eine Verkleinerung der Höhe (H) des Mahlspalts (3) in Abhängigkeit von einer Temperaturerhöhung der zweiten Bauteilgruppe (B) bewirkt, wobei die zweite Bauteilgruppe (B) bevorzugt einen mit dem zweiten Mahlelement (B, 2) verbundenen Mahlelementträger (B, 7), eine Motorwelle (B, 8) und/oder einen Motorwellen-Lagersitz (B, 9) umfasst, wobei besonders bevorzugt

i) die Motorwelle (B, 8) mit dem Mahlelementträger (B, 7) einerseits und mit dem Motorwellen-Lagersitz (B, 9) andererseits verbunden ist; und/oder
ii) das zweite Mahlelement (B, 2) ferritischen Stahl und/oder eine Keramik enthält oder daraus besteht und/oder eine Höhe, in Richtung der Drehachse (D) von zumindest einem der Mahlelemente (B, 2), im Bereich von 5 bis 10 mm, bevorzugt im Bereich von 7 bis 9 mm, aufweist; und/oder
iii) der Mahlelementträger (B, 7) Aluminium enthält oder daraus besteht und/oder eine Höhe, in Richtung der Drehachse (D) von zumindest einem der Mahlelemente (B, 2), im Bereich von 2 bis 8 mm, bevorzugt im Bereich von 4 bis 6 mm, aufweist; und/oder
iv) die Motorwelle (B, 8) austenitischen Stahl enthält oder daraus besteht und/oder eine Höhe, in Richtung der Drehachse (D) von zumindest einem der Mahlelemente (B, 2), im Bereich von 40 bis 70 mm, bevorzugt im Bereich von 50 bis 60 mm, aufweist; und/oder
v) der Motorwellen-Lagersitz (B, 9) Aluminium enthält oder daraus besteht und/oder eine Höhe, in Richtung der Drehachse (D) von zumindest einem der Mahlelemente (B, 2), im Bereich von 1 bis 5 mm, bevorzugt im Bereich von 2 bis 4 mm, aufweist.

9. Verfahren gemäß einem der vorhergehenden Ansprüche, **dadurch gekennzeichnet, dass** das Kompensationselement (A, 4)

   i) Kunststoff enthält oder daraus besteht, wobei der Kunststoff bevorzugt ein thermoplastischer Kunststoff ist, besonders bevorzugt Polyphenylensulfid ist; und/oder
   ii) einen spezifischen Wärmeausdehnungskoeffizienten von $\geq 40\ \mu$m/m·K, bevorzugt $\geq 50\ \mu$m/m·K, aufweist.

10. Kaffeemühle, enthaltend oder bestehend aus:

   a) eine erste Bauteilgruppe (A) einer Kaffeemühle, die ein mit der ersten Bauteilgruppe (A) verbundenes, erstes Mahlelement (A, 1) aufweist;
   b) eine zweite Bauteilgruppe (B) einer Kaffeemühle, die ein mit der zweiten Bauteilgruppe (B) verbundenes, zweites Mahlelement (B, 2) aufweist, wobei die erste Bauteilgruppe (A) mit der zweiten Bauteilgruppe (B) zu einer Kaffeemühle verbunden sind, wobei das erste Mahlelement (A, 1) über dem zweiten Mahlelement (B, 2) angeordnet ist und zwischen dem ersten Mahlelement (A, 1) und zweiten Mahlelement (B, 2) ein Mahlspalt (3) ausgebildet ist, wobei der Mahlspalt (3) eine Höhe (H) aufweist;
   c) optional: ein Kompensationselement (A, 4) an der ersten Bauteilgruppe (A) und/oder zweiten Bauteilgruppe (B);

   **dadurch gekennzeichnet, dass** eine Höhenänderung des Mahlspalts (3) der Kaffeemühle in Abhängigkeit von der Temperatur $\leq 0{,}30\ \mu$m/K beträgt.

11. Kaffeemühle gemäß Anspruch 10, **dadurch gekennzeichnet, dass** die Höhenänderung des Mahlspalts (3) in Abhängigkeit von der Temperatur $\leq 0{,}25\ \mu$m/K, bevorzugt $\leq 0{,}20\ \mu$m/K, besonders bevorzugt $\leq 0{,}15\ \mu$m/K, ganz besonders bevorzugt $\leq 0{,}10\ \mu$m/K, insbesondere $\leq 0{,}05\ \mu$m/K, optional 0 $\mu$m/K, beträgt.

12. Kaffeemühle gemäß einem der Ansprüche 10 oder 11, **dadurch gekennzeichnet, dass** die erste Bauteilgruppe (A) geeignet ist, eine Vergrößerung der Höhe (H) des Mahlspalts (3) in Abhängigkeit von einer Temperaturerhöhung der ersten Bauteilgruppe (A) zu bewirken, wobei die erste Bauteilgruppe (A) bevorzugt ein Mühlengehäuse (A, 5) und/oder ein Motorgehäuse (A, 6) der Kaffeemühle umfasst, wobei besonders bevorzugt

   i) das Mühlengehäuse (A, 5) mit dem ersten Mahlelement (A, 1) einerseits und dem Motorengehäuse (A, 6) andererseits verbunden ist; und/oder
   ii) das erste Mahlelement (A, 1) ferritischen Stahl und/oder eine Keramik enthält oder daraus besteht und/oder eine Höhe, in Richtung der Drehachse (D) von zumindest einem der Mahlelemente (B, 2), im Bereich von 5 bis 10 mm, bevorzugt im Bereich von 7 bis 9 mm, aufweist; und/oder
   iii) das Mühlengehäuse (A, 5) Aluminium, ferritischen Stahl und/oder eine Keramik enthält oder daraus besteht, bevorzugt ferritischen Stahl enthält oder daraus besteht, und/oder eine Höhe, in Richtung der Drehachse (D) von zumindest einem der Mahlelemente (B, 2), im Bereich von 15 bis 30 mm, bevorzugt im Bereich von 20 bis 25 mm, aufweist; und/oder
   iv) das Motorgehäuse (A, 6) Aluminium und/oder eine Keramik enthält oder daraus besteht und/oder eine Höhe, in Richtung der Drehachse (D) von zumindest einem der Mahlelemente (B, 2), im Bereich von 40 bis 80 mm, bevorzugt im Bereich von 50 bis 70 mm, aufweist.

13. Kaffeemühle gemäß einem der Ansprüche 10 bis 12, **dadurch gekennzeichnet, dass** die zweite Bauteilgruppe (B) geeignet ist, eine Verkleinerung der Höhe (H) des Mahlspalts (3) in Abhängigkeit von einer Temperaturerhöhung der zweiten Bauteilgruppe (B) zu bewirken, wobei die zweite Bauteilgruppe (B) bevorzugt einen mit dem zweiten Mahlelement (B, 2) verbundenen Mahlelementträger (B, 7), eine Motorwelle (B, 8) und/oder einen Motorwellen-Lagersitz (B, 9) umfasst, wobei besonders bevorzugt

   i) die Motorwelle (B, 8) mit dem Mahlelementträger (B, 7) einerseits und mit dem Motorwellen-Lagersitz (B, 9) andererseits verbunden ist; und/oder
   ii) das zweite Mahlelement (B, 2) ferritischen Stahl und/oder eine Keramik enthält oder daraus besteht und/oder eine Höhe, in Richtung der Drehachse (D) von zumindest einem der Mahlelemente (B, 2), im Bereich von 5 bis 10 mm, bevorzugt im Bereich von 7 bis 9 mm, aufweist; und/oder
   iii) der Mahlelementträger (B, 7) Aluminium enthält oder daraus besteht und/oder eine Höhe, in Richtung der Drehachse (D) von zumindest einem der Mahlelemente (B, 2), im Bereich von 2 bis 8 mm, bevorzugt im Bereich von 4 bis 6 mm, aufweist; und/oder

iv) die Motorwelle (B, 8) austenitischen Stahl enthält oder daraus besteht und/oder eine Höhe, in Richtung der Drehachse (D) von zumindest einem der Mahlelemente (B, 2), im Bereich von 40 bis 70 mm, bevorzugt im Bereich von 50 bis 60 mm, aufweist; und/oder

v) der Motorwellen-Lagersitz (B, 9) Aluminium enthält oder daraus besteht und/oder eine Höhe, in Richtung der Drehachse (D) von zumindest einem der Mahlelemente (B, 2), im Bereich von 1 bis 5 mm, bevorzugt im Bereich von 2 bis 4 mm, aufweist.

**14.** Kaffeemühle gemäß einem der Ansprüche 10 bis 13, **dadurch gekennzeichnet, dass** das Kompensationselement (A, 4)

i) Kunststoff enthält oder daraus besteht, wobei der Kunststoff bevorzugt ein thermoplastischer Kunststoff ist, besonders bevorzugt Polyphenylensulfid ist; und/oder

ii) einen spezifischen Wärmeausdehnungskoeffizienten von $\geq 40$ $\mu$m/m·K, bevorzugt $\geq 50$ $\mu$m/m·K, aufweist.

**15.** Kaffeemühle gemäß einem der Ansprüche 10 bis 14, **dadurch gekennzeichnet, dass** die Kaffeemühle über ein Verfahren gemäß einem der Ansprüche 1 bis 9 hergestellt ist.

Figur

Europäisches
Patentamt

European
Patent Office

Office européen
des brevets

# EUROPÄISCHER RECHERCHENBERICHT

Nummer der Anmeldung

EP 25 15 8501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 367 946 A (DITTING ADOLF [CH]) 15. März 1963 (1963-03-15) | 1-8, 10-13,15 | INV. A47J42/16 |
| Y | * Seiten 1, 2; Abbildung 1 * ----- | 9,14 | A47J42/38 |
| Y | EP 2 980 348 B1 (3M INNOVATIVE PROPERTIES CO [US]) 5. Juli 2017 (2017-07-05) * Absatz [0116]; Abbildung 3a * ----- | 9,14 | ADD. A47J42/06 |
| Y | DE 10 2009 024337 A1 (OERLIKON LEYBOLD VACUUM GMBH [DE]) 16. Dezember 2010 (2010-12-16) * Absatz [0010]; Abbildung 2 * ----- | 9,14 | |
| A | US 2013/209626 A1 (KELLER MARCO [CH] ET AL) 15. August 2013 (2013-08-15) * Absätze [0001], [0002] * ----- | 2 | |

RECHERCHIERTE
SACHGEBIETE (IPC)

A47J
E21B

Der vorliegende Recherchenbericht wurde für alle Patentansprüche erstellt

| Recherchenort | Abschlußdatum der Recherche | Prüfer |
|---|---|---|
| München | 14. Mai 2025 | Mestrovic, Denis |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 8501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2025

| Im Recherchenbericht angeführtes Patentdokument | Datum der Veröffentlichung | Mitglied(er) der Patentfamilie | Datum der Veröffentlichung |
|---|---|---|---|
| CH 367946 A | 15-03-1963 | AT 219945 B | 26-02-1962 |
| | | BE 590568 A | 01-09-1960 |
| | | CH 367946 A | 15-03-1963 |
| | | DE 1117979 B | 23-11-1961 |
| | | NL 109437 C | 14-05-2025 |
| EP 2980348 B1 | 05-07-2017 | AU 2015296866 A1 | 16-02-2017 |
| | | BR 112017001857 A2 | 21-11-2017 |
| | | CA 2956483 A1 | 04-02-2016 |
| | | CN 106574494 A | 19-04-2017 |
| | | DK 2980348 T3 | 02-10-2017 |
| | | EP 2980348 A1 | 03-02-2016 |
| | | ES 2640477 T3 | 03-11-2017 |
| | | RU 2645393 C1 | 21-02-2018 |
| | | US 2017254185 A1 | 07-09-2017 |
| | | WO 2016018821 A1 | 04-02-2016 |
| DE 102009024337 A1 | 16-12-2010 | DE 102009024337 A1 | 16-12-2010 |
| | | EP 2440789 A1 | 18-04-2012 |
| | | JP 2012529591 A | 22-11-2012 |
| | | TW 201105864 A | 16-02-2011 |
| | | WO 2010142633 A1 | 16-12-2010 |
| US 2013209626 A1 | 15-08-2013 | EP 2412246 A1 | 01-02-2012 |
| | | EP 2597961 A1 | 05-06-2013 |
| | | JP 2013535323 A | 12-09-2013 |
| | | US 2013209626 A1 | 15-08-2013 |
| | | WO 2012013620 A1 | 02-02-2012 |

EPO FORM P0461

Für nähere Einzelheiten zu diesem Anhang : siehe Amtsblatt des Europäischen Patentamts, Nr.12/82